# EUROPÄISCHE PATENTSCHRIFT

(11) **EP 0 416 291 B1**
(45) Veröffentlichungstag und Bekanntmachung des Hinweises auf die Patenterteilung: **21.04.1993**
(21) Anmeldenummer: 90114889.0
(22) Anmeldetag: 02.08.1990
(51) Int. Cl.: H04B 3/04, H04B 3/58, H04L 25/03, H04L 12/02

(54) **Verfahren zur Zwischenverstärkung von digitalen Signalen sowie Zwischenverstärker für digitale Signale**
Method for intermediate amplification of digital signals and intermediate repeater for digital signals
Procédé pour l'amplification intermédiaire des signaux numériques et amplificateur intermédiaire pour signaux numériques

(30) Priorität: 22.08.1989 DE 3927681
(43) Veröffentlichungstag der Anmeldung: 13.03.1991
(73) Patentinhaber: RICHARD HIRSCHMANN GMBH & CO., 73726 Esslingen (DE)
(72) Erfinder: Schmid, Bernhard, c/o Richard Hirschmann GmbH & Co, D-7300 Esslingen (DE); Schenkyr, Rainer, c/o Richard Hirschmann GmbH & Co, D-7300 Esslingen (DE)
(74) Vertreter: Geyer, Ulrich F., Dr. Dipl.-Phys.

(56) Entgegenhaltungen:
- EP-A- 0 038 435
- EP-A- 0 263 960
- US-A- 4 718 074

## Beschreibung

Die Erfindung betrifft ein Verfahren zur Zwischenverstärkung von digitalen Signalen gemäß dem Oberbegriff des Ansprüches 1. Die Erfindung betrifft weiterhin einen Zwichenverstärker für digitale Signale gemäß dem Oberbegriff des Anspruches 17. Ein Zwischenverstärker dieser Art ist beispielsweise als elektronischer Baustein T7200 Multi-Port Repeater Unit Controller der Firma AT&T bekannt und im Datenblatt zu diesem elektronischen Baustein beschrieben. Dieser bekannte Zwischenverstärker ist für das CSMA/CD - (Carrier Sense Multiple Access/Collision Detection) - Zugriffsverfahren gemäß der IEEE 802.3-Norm vorgesehen und erfüllt die diesem Verfahren bzw. dieser Norm entsprechenden Bedingungen. Das CSMA/CD-Verfahren wird insbesondere im Zusammenhang mit Rechnernetzwerken eingesetzt.

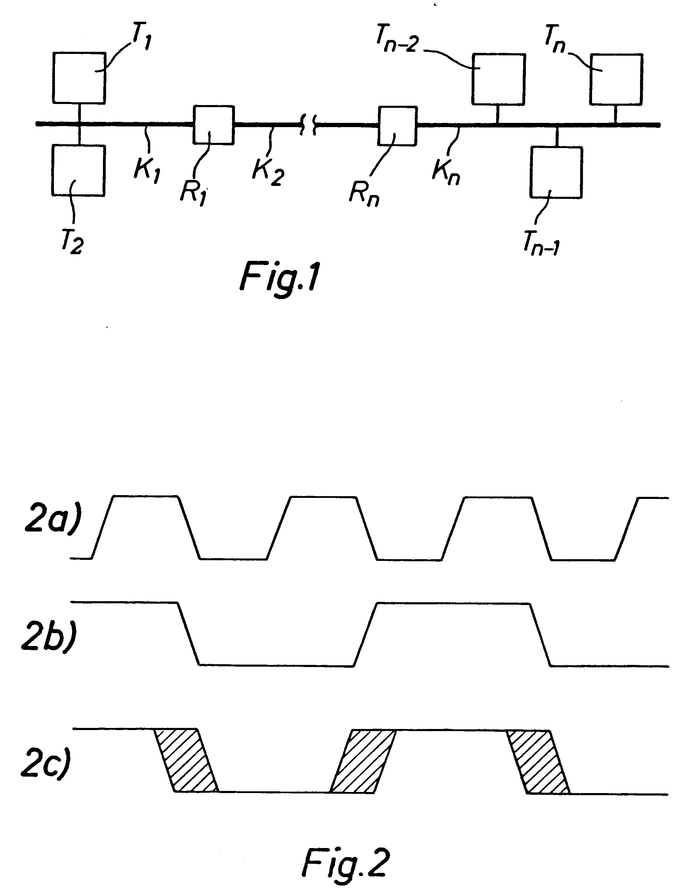

In Fig. 1 ist der prinzipielle Aufbau eines CSMA/CD-Rechnernetzes schematisch dargestellt. Rechner Tᵢ sind über Übertragungskanäle, sogenannte Segmente Kᵢ, miteinander verbunden. Zwischen den einzelnen Segmenten befinden sich jeweils ein Zwischenverstärker Rᵢ, im englischen Sprachgebrauch auch Repeater genannt, der die Aufgabe hat, die über die Übertragungskanäle Kᵢ übertragenen digitalen Signale sowohl hinsichtlich ihrer Amplituden als auch hinsichtlich ihres Übertragungstaktes zu regenerieren. Die Amplitudenregeneration ist erforderlich, da die digitalen Datensignale während der Übertragung in den Übertragungskanälen in ihrer Amplitude abgeschwächt werden.

Anhand von Fig. 2 wird nachfolgend erläutert, weshalb eine Taktregeneration erforderlich ist. Fig. 2a gibt das Sendetaktsignal wieder, während Fig. 2b das Sendedatensignal am Eingang eines Übertragungskanals Kᵢ zeigt. Am Eingang eines Übertragungssignals Kᵢ bzw. am Ausgang eines Zwischenverstärkers Rᵢ stehen die Sendedaten in einem festen zeitlichen Bezug zum Sendetaktsignal. Bei der Übertragung des Datensignals über einen Übertragungskanal Kᵢ geht dieser korrekte, feste zeitliche Bezug des Datensignals zum Sendetaktsignal verloren. Gründe hierfür sind die begrenzte Übertragungsbandbreite der Übertragungskanäle Kᵢ, Störsignale, zeitlich veränderliche Entscheidungsschwellen der Eingangsschaltungen der Zwischenverstärker Rᵢ usw.

Anhand eines sog. NRZ - (Non Return to Zero) -Signals ist dieser Vorgang in Fig. 2c dargestellt, wobei hier bereits die Amplitudenregeneration vorgenommen wurde. Auch sei der durch die Laufzeit des Datensignals im Übertragungskanal Kᵢ verursachte Phasenversatz zwischen den Daten am Eingang und am Ausgang eines Übertragungskanals Kᵢ nicht berücksichtigt. Wegen des Verlusts des korrekten zeitlichen Bezugs zwischen dem Sendetaktsignal und dem Datensignal ergibt sich der in Fig. 2c dargestellte schraffierte Bereich mit nicht definierter Phase. Dieses Phasenzittern, im englischen Sprachgebrauch auch Jitter genannt, verändert die spektralen Eigenschaften des Datensignals und muß daher klein gehalten werden, um eine fehlerfreie Taktableitung im Empfänger und damit eine korrekte, fehlerfreie Interpretation des Datensignals in der Empfangsschaltung zu ermöglichen. Die Taktregeneration im Zwischenverstärker Rᵢ hat daher die Aufgabe, das Datensignal phasenzitterfrei wieder auszusenden.

Nachfolgend werden Eigenschaften und Parameter des CSMA/CD-Übertragungsverfahrens nach der IEEE 802.3-Norm beschrieben, die auch für die Zwischenverstärker Rᵢ gelten bzw. denen auch die Zwischenverstärker Rᵢ entprechen sollten.

Eine der Eigenschaften des CSMA/CD-Zugriffsverfahrens besteht darin, daß die zu übertragenden Daten in einzelne Pakete unterteilt werden, die einen Steuerinformations- und Nutzdatenteil sowie eine diesem Steuerinformations- und Nutzdatenteil vorgeschaltete Präambel aufweisen.

Die Präambel besteht aus einem regelmäßigen, informationslosen Datenmuster, das es den Empfängern, d. h. den Teilnehmern oder Rechnern Tᵢ, sowie den Zwischenverstärkern ermöglicht, sich auf ein empfangenes Datenpaket aufzusynchronisieren. Die Mindestlänge der Präambel ist vorgeschrieben und beträgt bei dem besagten Zugriffsverfahren nach der erwähnten Norm 56 Bits.

Der Steuerinformations- und Nutzdatenteil enthält Steuerinformation sowie die eigentlichen Nutzdaten. Die Minimal- und die Maximallänge dieses Steuerinformations- und Nutzdatenteils sind ebenfalls vorgeschrieben und betragen im hier besprochenen Verfahren 512 Bits als Minimallänge und 12 144 Bits als Maximallänge.

Weiterhin ist der minimale zeitliche Abstand, mit dem die Datenpakete im Netzwerk gesendet werden dürfen, vorgeschrieben. Dieser Abstand, der auch als Paketabstand oder Inter Frame Gap (IFG) bezeichnet wird, beträgt bei dem hier besprochenen Verfahren 96 µs. Der minimale zeitliche Abstand gibt den Teilnehmern bzw. den Rechnern Tᵢ die Möglichkeit, sich nach Ende eines Datenpakets auf den Empang des nächsten vorzubereiten.

Weiterhin ist die maximale Laufzeit eines Datenpakets zwischen den beiden am weitesten voneinander entfernten Teilnehmern bz. Rechnern T*i* im Netzwerk vorgeschrieben. Bei dem hier besprochenen Verfahren beträgt diese maximale Laufzeit 25,6 µs. Bei gegebener Ausbreitungsgeschwindigkeit der Signale in den Übertragungskanälen Kᵢ ist die maximale räumliche Ausdehnung des Netzwerks bei bekannter Laufzeitverzögerung und bekannter Anzahl der Zwischenverstärker Kᵢ festgelegt. Beim CSMA/CD-Zugriffsverfahren nach der genannten Norm beträgt diese maximale räumliche Ausdehnung höchstens 5 km.

Ein weiterer Parameter des genannten Zugriffsverfahrens nach der besagten Norm ist die Bitrate, die 1x10⁷ Bits/s beträgt und eine Abweichung von höchstens +/- 0,01 % aufweisen darf. Als Codierung wird der sogenannte Manchester-Code verwendet, der neben den Nutzdaten zusätzliche Taktinformation enthält und damit eine sichere Taktableitung durch die Rechner Tᵢ bzw. die Zwischenverstärker unabhängig vom Dateninhalt ermöglicht.

Aus den zuvor erläuterten Eigenschaften, nämlich der Struktur des Datenpakets, dem minimalen zeitlichen Abstand zwischen den Datenpaketen und der maximalen Laufzeit eines Datenpakets im Netzwerk ergeben sich die nachfolgenden Forderungen an die Taktregeneration eines Zwischenverstärkers Rᵢ in einem CSMA/CD-Netzwerk nach der IEEE 802.3-Norm.
1. Würde sich die Länge der Präambel beim Durchlauf eines Datenpakets durch einen Zwischenverstärker verkürzen, würde dies bedeuten, daß bei der Verwendung mehrerer hintereinander geschalteter Zwischenverstärker die Präambel sukzessive immer weiter verkürzt werden würde, bis schließlich das Aufsynchronisieren eines Teilnehmers oder eines weiteren Zwischenverstärkers auf das Datenpaket nicht mehr möglich ist. Es besteht daher die Forderung, daß die Länge der Präambel beim Durchlauf eines Datenpakets durch einen Zwischenverstärker nicht verkürzt wird, wobei jedoch eine mögliche Verlängerung der Präambel zulässig ist.
2. Wenn der zeitliche Abstand zwischen zwei aufeinanderfolgenden Datenpaketen bei Einsatz eines Zwischenverstärkers über einen Minimalwert hinaus verkürzt werden würde, würde dies bedeuten, daß die Paketabstände bei der Kaskadierung mehrerer Zwischenverstärker schrittweise immer weiter verkürzt würden, wodurch die Anzahl der hintereinander zu schaltenden Zwischenverstärker begrenzt wäre. Zwar existieren zur Zeit keine gültigen Normen, die den minimalen Paketabstand beim Empfänger festlegen. Es bestehen jedoch bereits Normentwürfe, die einen zeitlichen Mindestabstand von ca. 5 µs vorsehen. Bei Verwendung von Zwischenverstärkern in den Netzwerken muß daher gefordert werden, daß der zeitliche Abstand zwischen zwei aufeinanderfolgenden Datenpaketen durch einen Zwischenverstärker nicht bzw. nur bis zu einem bestimmten Betrag verkürzt werden darf.
3. Eine weitere Forderung an einen Zwischenverstärker besteht darin, daß die Einschaltverzögerung, im englischen Sprachgebrauch mit Start-Up-Delay bezeichnet möglichst klein sein soll, wie im weiteren noch erläutert werden wird. Die Einschaltverzögerung ist die Zeit, die zwischen dem Empfang des ersten Präambelbits eines Datenpakets und dem Wiederaussenden des ersten Präambel-bits des im Zwischenverstärker amplituden- und/oder taktregenerierten Datenpakets verstreicht. Die Einschaltverzögerung erhöht die Laufzeit eines Datenpakets innerhalb des Netzwerkes und verringert damit dessen maximale räumliche Ausdehnung; oder anders ausgedrückt, bei gegebener räumlicher Ausdehnung eines Netzwerkes ist die Anzahl der kaskadierbaren Zwischenverstärker begrenzt.

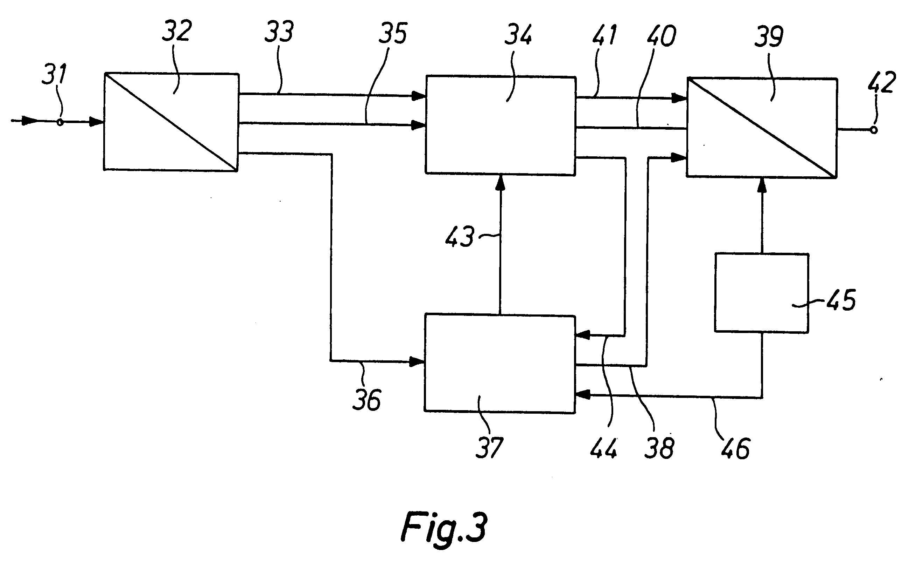

In Fig. 3 ist die Grundstruktur einer herkömmlichen Schaltungsanordnung für die Taktregeneration in einem Zwischenverstärker wiedergegeben.

Am Eingang 31 der Taktregenerationsschaltung liegt das Empfangsdatensignal an, das an eine Taktableitungs- und Decodierungsstufe 32 gelangt. Die Taktableitungs- und Decodierungsstufe 32 leitet ein Empfangstaktsignal aus dem Empfangsdatensignal ab, wandelt das codierte Empfangsdatensignal, welches im Falle eines Netzwerks nach der IEEE 802.3-Norm manchestercodiert ist, in das NRZ-Format um. Das NRZ-Datensignal gelangt über eine Leitung 33 an den Eingang eines Pufferspeichers 34. Das Empfangstaktsignal gelangt über eine Leitung 35 als Einlesetaktsignal an den Einlese-Taktsignaleingang des Pufferspeichers 34.

Die Taktsignalableitung aus dem Empfangsdatensignal erfolgt in der Taktableitungs- und Decodierungsstufe 32 üblicherweise mittels eines Phasenregelkreises, im englischen Sprachgebrauch auch als Phase Lock Loop (PLL) bekannt, mit dem ein lokaler Oszillator mit der Präambel des Empfangsdatensignals synchronisiert wird. Nach Abschluß des Synchronisierungsvorgangs wird ein sog. RX-Carrier-Signal erzeugt, das über die Leitung 36 an eine Steuerschaltung 37 gelangt.

Über eine Leitung 38 gelangt ein Auslese-Freigabesignal an einen Codierer 39, der dem Pufferspeicher 34 ein Sendetaktsignal als Auslesetaktsignal über die Leitung 40 bereitstellt, so daß dementsprechend die NRZ-codierten Daten über die Leitung 41 aus dem Pufferspeicher 34 ausgelesen und im Codierer 39 in manchestercodierte Daten umgesetzt werden, so daß am Ausgang 42 ein Sendedatensignal bereitgestellt wird. Da die Daten des Sendedatensignals in einem festen zeitlichen Bezug zum Auslese-bzw. Sendetaktsignal stehen, ist das Sendedatensignal frei von Phasenzittern.

Die Steuerschaltung 37 gibt über die Leitung 43 ein Einlese-Freigabesignal an den Pufferspeicher 34 ab. Über eine Leitung 44 erhält die Steuerschaltung 37 ein sog. DOR-Signal zugeleitet, das anzeigt, wenn der Pufferspeicher 34 vollständig ausgelesen ist. Ein Sendetaktgenerator 45 stellt sowohl der Steuerschaltung 37 als auch dem Codierer 39 das Sendetaktsignal bereit.

Der Pufferspeicher 34 ist vorzugsweise entsprechend dem FIFO-Prinzip (First In, First Out) realisiert und ermöglicht ein unabhängiges, asynchrones Ein- und Auslesen von Daten. Das Einlesen der an der Leitung 33 auftretenden Empfangsdatensignale in den Pufferspeicher 34 erfolgt synchron zum Empfangstaktsignal, das an der Leitung 35 anliegt. Das Auslesen der Daten aus dem Pufferspeicher 34 erfolgt synchron zum an der Leitung 40 anliegenden Auslesetaktsignal, das gleich dem lokalen Sendetaktsignal ist. Das Sendetaktsignal ist zum Empfangstaktsignal asynchron.

Die Anzahl der Bits, die im Pufferspeicher 34 zwischengespeichert werden müssen, hängt von der Frequenzdifferenz zwischen dem Sende- und Empfangstaktsignal und der maximalen Länge des Datenpakets ab. Am Beispiel der Spezifikationen nach der IEEE 802.3-Norm wird dies nachfolgend zahlenmäßig veranschaulicht.

Gemäß dem CSMA/CD-Verfahren nach der besagten Norm beträgt die Bitrate 1 x 10⁷ Bits/s bei einer maximalen Abweichung von +/- 0,01 %, d. h. von +/- 1 x 10³ Bits/s. Ohne die Präambel beträgt die maximale Paketlänge 12 144 Bits.

Bei minimaler Bitrate ergibt sich aus den genannten Daten eine maximale Länge der Paketdauer von L1 = 1,214521 ms.

Bei maximaler Bitrate beträgt die Paketdauer maximaler Länge L2 = 1,214279 ms.

Der Unterschied zwischen L1 und L2 beträgt also 242 ns. Da bei einer Bitrate von 1 x 10⁷ Bit/s die Bitzeit 100 ns lang ist, entspricht dieser Zeitunterschied von 242 ns unge-fähr 2,5 Bitzeiten. Das bedeutet, daß mindestens 3 Bits zwischengespeichert werden müssen. Wird nämlich mit minimal zulässiger Bitrate ein- und maximal zulässiger Bitrate ausgelesen, also schneller aus- als eingelesen, muß der Pufferspeicher vor Beginn des Auslesens durch den Codie-rer mindestens 3 Bits enthalten, damit sichergestellt ist, daß bei jedem Auslesetakt auch mindestens ein Bit im Pufferspeicher vorhanden ist.

Wird dagegen mit maximaler Bitrate eingelesen und mit minimaler Bitrate ausgelesen, müssen zusätzlich drei weitere Bits zwischengespeichert werden. Die minimale Pufferspeicherkapazität, auch minimale Tiefe des Pufferspeichers genannt, muß deshalb mindestens 6 Bits betragen.

Die hier ermittelten Zahlen stellen theoretische Minimalwerte dar, bei denen insbesondere vorausgesetzt ist, daß die Bitraten innerhalb der spezifizierten Toleranzgrenzen liegen. Bei kommerziell eingesetzten Zwischenverstärkern werden üblicherweise mehr als 3 Bits zwischengespeichert, um die Empfindlichkeit gegenüber Schwankungen der Bitraten zu reduzieren und damit die Betriebssicherheit zu erhöhen.

Die Anzahl der zwischengespeicherten Bits bestimmt im wesentlichen die statische Laufzeit einer Taktgenerationsschaltung. Die statische Laufzeit ist die Zeit zwischen dem Empfang und der Wiederaussendung ein und desselben Bits durch einen Zwischenverstärker. Um Verwechslungen zu vermeiden, sei darauf hingewiesen, daß der Begriff der statischen Laufzeit nicht zu verwechseln ist mit der bereits früher erläuterten Einschaltverzögerung, die als Zeit zwischen dem Empfang des ersten Präambelbits eines Datenpakets und dem Wiederaussenden des ersten Präambelbits des amplituden- und taktregenerierten Datenpakets definiert ist.

Werden n Bits zwischengespeichert und stimmen der Sende- und Empfangstakt überein, ist die statische Laufzeit > größer oder gleich n Bitzeiten.

Die Steuerschaltung 37 steuert den Pufferspeicher 34 und den Codierer 39 über die Leitung 43 bzw. 38.

Ist der bereits erwähnte Synchronisierungsvorgang in der Taktableitungs- und Decodierungsstufe 32 beendet und stehen am Ausgang dieser Stufe 32 das Empfangsdatensignal und das Empfangstaktsignal zur Verfügung, wird dies über die Leitung 36 mit dem Rₓ-Carrier-Signal der Steuerschaltung 37 mitgeteilt, die in Abhängigkeit davon das Einlesen in den Pufferspeicher über die Leitung 43 freigibt. Ist im Puffer eine ausreichende Anzahl an Daten gespeichert, um bei maximaler unterschiedlicher Einlese- und Auslesegeschwindigkeit für den Auslesevorgang immer wenigstens ein Bit zur Verfügung zu haben, wird das Auslesen durch den Codierer 39 freigegeben.

Bei Datenpaketende, das der Steuerschaltung 37 durch das Rₓ-Carrier-Signal über die Leitung 36 angezeigt wird, sperrt die Steuerschaltung 37 über die Leitung 43 das Einlesen weiterer Bits in den Pufferspeicher 34. Nachdem daraufhin der Pufferspeicher 34 vollständig ausgelesen ist, was der Steuerschaltung 37 über die Leitung 44 mittels des DOR-Signals angezeigt wird, sperrt die Steuerschaltung 37 das Auslesen des Pufferspeichers 34 durch den Codierer 39 über die Leitung 38. Die Übertragung eines Datenpakets ist damit abgeschlossen.

Die Funktionsgruppe Taktableitungs- und Decodierungsstufe 32 und Codierer 39 sind beispielsweise als elektronischer Baustein AM7992B der Firma Advanced Micro Devices (AMD) bekannt und in entsprechenden Datenblättern dieser Firma beschrieben. Die Steuereinheit für einen derartigen Zwischenverstärker wird von der Firma AT&T Microelektronics GmbH in Gestalt des elektronischen Bausteins T7200 Multi-Port Repeater Unit Controller angeboten und ist in einem entsprechenden Datenblatt beschrieben. Mit diesem Baustein werden mindestens 7 Bits zwischenge-speichert. Ein Beispiel für einen Pufferspeicher 34 ist der elektronische Baustein 74HCT40105 der Firma Valvo GmbH, der ebenfalls in einem entsprechenden Datenblatt dieser Firma beschrieben ist.

Der Sendetaktgenerator 45 bzw. dessen Oszillator muß hinsichtlich seiner Frequenzgenauigkeit den Anforderungen der gewählten Norm entsprechen.

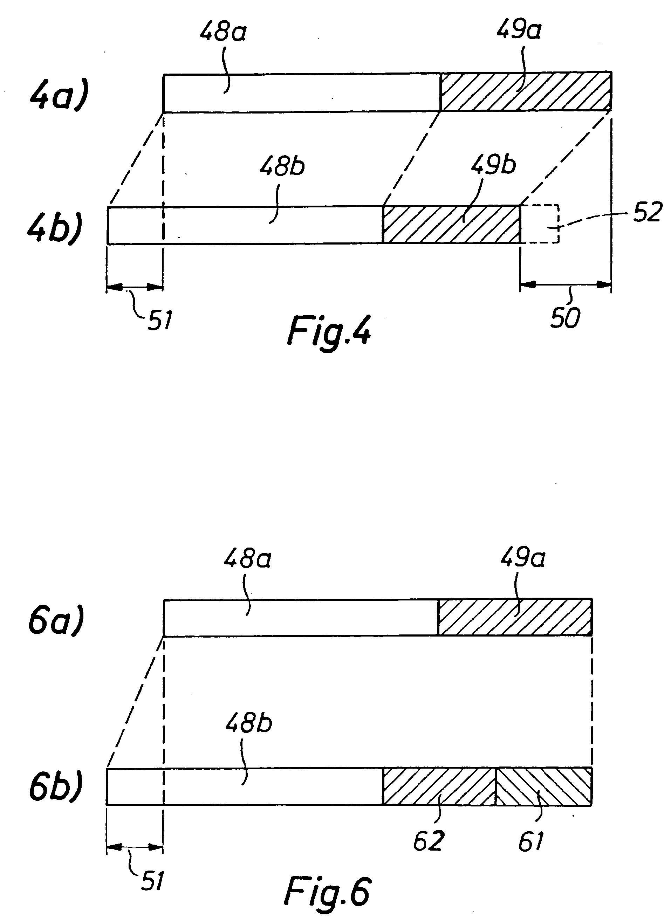

Anhand von Fig. 4 werden nachfolgend die Veränderungen eines Datenpakets beim Durchlaufen der in Fig. 3 dargestellten herkömmlichen Taktsignalregenerationsschaltung erläutert.

Fig. 4a zeigt die räumliche Verteilung eines Datenpakets zu einem Zeitpunkt t = t₀ , wobei hypothetisch angenommen ist, dieses Datenpaket habe den Zwischenverstärker unbeeinflußt durchlaufen. In Fig. 4b ist das durch den Zwischenverstärker veränderte Datenpaket dargestellt.

Das Datenpaket setzt sich jeweils aus dem Steuerinformations- und Nutzdatenteil 48a bzw. 48b und der Präambel 49a bzw. 49b zusammen. Die Einschaltverzögerung 50 besteht aus der Summe des Zeitverlusts, der durch den Synchronisierungsprozeß in der Taktableitungs- und Decodierungsstufe 32 entsteht, und der statischen Laufzeit 51. Der durch den Synchronisierungsprozeß hervorgerufene Zeitverlust beträgt beispielsweise beim elektronischen Baustein AM7992B mindestens vier Bitzeiten. Bei der Kombination dieses Bausteins AM7992B mit einem Zwischenspeicher von 7 Bits entsprechend dem erwähnten Baustein T7200 der Firma AT&T ergäbe sich eine Einschaltverzögerung 50 von ungefähr 1,1 µs. In einem Rechnernetzwerk nach der IEEE 802.3-Norm, bei der die maximale Laufzeit eines Datenpakets zwischen den beiden am weitesten voneinander entfernten Teilnehmern Tᵢ im Netzwerk 25,6 µs ent- spricht, wäre deshalb bei der Hintereinanderschaltung von 25,6/1,1 = 23 Zwischenverstärkern die zulässige Netzaus-dehnung auf 0 geschrumpft, wobei die zusätzlichen Laufzeitverzögerungen, die durch die einzelnen Schaltungsbauteile Decodierer (Teil der Taktableitungs- und Decodierstufe 32), Pufferspeicher 34 und Codierer 39 entstehen, unberücksichtigt geblieben sind.

Wie bereits erläutert, entstehen Präambelbitverluste 52. Aufgrund des Sychronisierungsprozesses bei der Taktsignalableitung werden einige Bits der Präambel, beispielsweise mindestens 4 Bits beim Bau-stein AM7992B verbraucht. Bei einer Präambellänge von 56 Bits würden die Datenbits nach Durchlaufen von 14 Zwischenverstärkern keine Präambel mehr aufweisen.

Da die Einschaltverzögerung 50 größer als die statische Laufzeit 51 ist, wird der zeitliche Abstand von zwei aufeinanderfolgenden Datenpaketen mit jedem Zwischenverstärker vergrößert.

Die vorhergehenden Ausführungen machen deutlich, daß mit der in Fig. 3 dargestellten Schaltung die früher beschriebenen Forderungen an einen Zwischenverstärker, daß die Länge der Präambel nicht verkürzt werden darf, und daß die Einschaltverzögerung möglichst kleingehalten sein soll, nicht erfüllt werden. Die Verwendung der in Fig. 3 darge-stellten Schaltungsanordnung ist in einem Netzwerk nach der IEEE 802.3-Norm daher nur sehr beschränkt möglich.

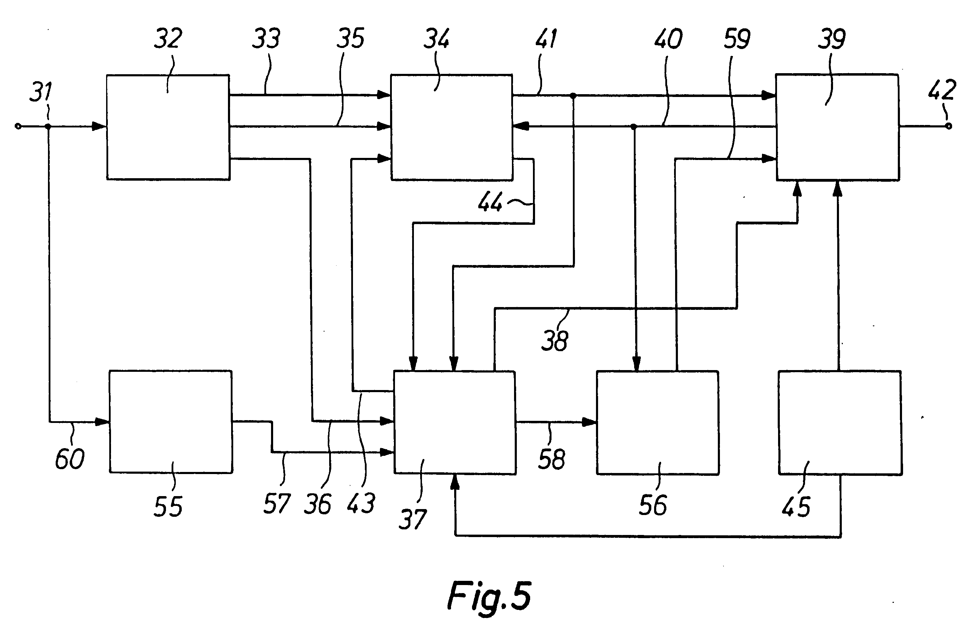

In Fig. 5 ist eine erweiterte Taktregenerationsschaltung bekannter Art schematisch dargestellt. Die Schaltungsteile in Fig. 5, die denen in Fig. 3 entsprechen, sind mit denselben Bezugszeichen versehen und werden nicht nochmals erläutert.

Gegenüber der Schaltungsanordnung von Fig. 3 unterscheidet sich die Schaltungsanordnung gemäß Fig. 5 darin, daß zusätzlich eine Trägererkennungsstufe 55 und eine Stufe 56 zur Erzeugung einer synthetischen Präambel, nachfolgend kurz Präambelgenerator genannt, vorgesehen ist. Der Eingang der Trägererkennungsstufe 55 ist mit dem Eingang 31 der Taktregenerationsschaltung über eine Leitung 60 verbunden, so daß die Trägererkennungsstufe 55 in der Lage ist, den Beginn einer Präambel eines einlaufenden Datenpakets zu erkennen. Diese Information wird der Steuerschaltung 37 über die Datenleitung 57 mit dem Signal "Daten vorhanden" zugeleitet. Über eine Leitung 58 ist die Steuerschaltung 37 mit dem Präambelgenerator 56 verbun-den, dessen Ausgangssignal über die Leitung 59 an den Codierer 39 gelangt. Der Präambelgenerator 56 erhält weiterhin das auf der Leitung 40 anliegende Auslesetaktsignal, das gleichzeitig das Sendetaktsignal ist, zugeleitet.

Die Trägererkennungsstufe 55 ist so ausgebildet, daß die zeitliche Verzögerung zwischen dem Beginn der an ihrem Eingang auftretenden Präambel und der Meldung an die Steuerschaltung 37 sehr klein, vorzugsweise kleiner als eine Bitzeit ist. Die Steuerschaltung 37 ist daher bereits vor dem Ende des Synchronisierungsvorgangs in der Taktableitungs- und Decodierungsstufe 32 darüber unterrichtet, daß ein Datenpaket an der Taktregenerationsschaltung anliegt.

Die Struktur der Präambel am Beginn eines Datenpakets ist eindeutig festgelegt. Es ist deshalb möglich, anstelle der empfangenen Präambel eine künstlich erzeugte auszusenden. Der Präambelgenerator 56 nimmt diese Aufgabe wahr und erzeugt eine synthetische Präambel.

Wird die Steuerschaltung 37 durch die Trägererkennungsstufe 55 vom Empfang eines Datenpakets unterrichtet, aktiviert sie nach einer wählbaren Wartezeit den Präambelgenerator 56 über die Leitung 58 und den Codierer 39 über die Leitung 38. Wird die Wartezeit klein oder praktisch Null gewählt, wird die synthetische Präambel bereits ausgesendet, bevor die Synchronisation für die Taktableitung abgeschlossen und der Pufferspeicher 34 ausreichend viele Bits gespeichert hat. Dies bedeutet, daß die Einschaltverzögerung sehr klein gehalten werden kann.

Ist seit dem Beginn des Auftretens eines einlaufenden Datenpakets eine genügend lange Zeit, die zum Auffüllen des Pufferspeichers 34 ausreicht, verstrichen, wird der Präambelgenerator 56 deaktiviert und der Pufferspeicher 34 freigegeben. Daher wird anstelle der synthetischen Präambel von diesem Zeitpunkt an die empfangene Präambel ausgesendet.

Der weitere Ablauf bis zum Ende des Datenpakets entspricht nunmehr dem der in Fig. 3 dargestellten Taktgenerationsschaltung und wird daher nicht nochmals erläutert.

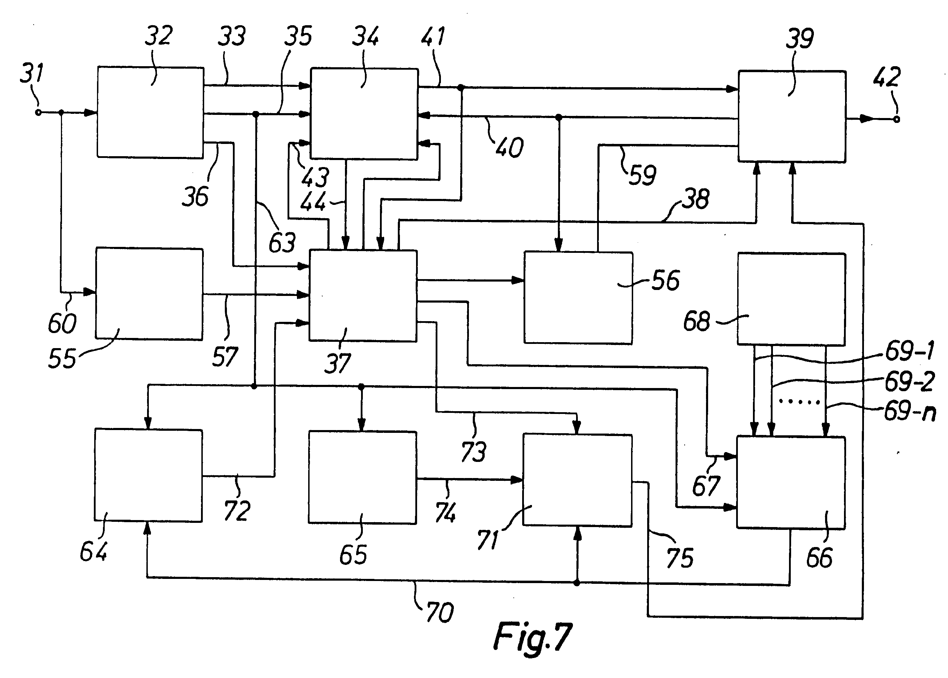

Anhand von Fig. 6, die die schematische räumliche Darstellungen von Datenpaketen wiedergibt, werden nachfolgend Änderungen erläutert, die ein Datenpaket bei einem Durchlauf durch eine Taktgenerationsschaltung gemäß Fig. 5 erfährt.

Fig. 6a zeigt die räumliche Verteilung des unbeeinflußten Datenpakets zu einem Zeitpunkt t = t₀ unter der hypothetischen Annahme, daß das Datenpaket den Zwischenverstärker unbeeinflußt durchlaufen habe. In Fig. 6b ist das durch die in Fig. 5 dargestellte Taktregenerationsschaltung veränderte Datenpaket wiedergegeben. Die Datenpaketteile, Präambeln und Zeitdauern sind, soweit sie der Darstellung in Fig. 4 entsprechen, mit denselben Bezugszeichen versehen und werden nicht nochmals erläutert.

Aus dem Vergleich des unbeeinflußten und des durch die bekannte Taktregenerationsschaltung veränderten Datenpakets ergibt sich folgendes:

Da die Trägererkennungsstufe 55 den Beginn eines eingehenden Datenpakets sofort erkennt, kann in Abhängigkeit davon sofort ein synthetischer Präambelteil 61 ausgesendet werden, an den sich dann die Absendung des empfangenen Präambelteils 62 anschließt, wenn der Synchronisierungsvorgang in der Taktableitungs- und Decodierungsstufe 32 abgeschlossen ist.

Daraus ergibt sich, daß im Vergleich zu dem durch die Schaltung in Fig. 3 veränderten Datenpaket gemäß der Darstellung in Fig 4b die Einschaltverzögerung, d. h. der Zeitraum zwischen dem Empfang des ersten Präambelbits und dem Wiederaussenden des ersten Präambelbits eines Datenpakets, klein ist. Ein weiterer Vorteil der Taktregenerationsschaltung gemäß Fig. 5 gegenüber derjenigen von Fig. 3 besteht darin, daß die Präambel nicht verkürzt wird. Als weitere Konsequenz wird der Paketabstand bzw. das Inter Frame Gap um die Differenz zwischen der Einschaltverzögerung und der statischen Laufzeit verringert.

Aus den erläuterten Eigenschaften des gemäß der Taktregenerationsschaltung von Fig. 5 veränderten Datenpakets lassen sich die an einen Zwischenverstärker gestellten Forderungen eines minimalen zeitlichen Abstands bzw. eines unveränderten Inter Frame Gaps, und die Forderung nach einer minimalen Laufzeit eines Datenpakets - wie weiter oben bereits erläutert wurde - gleichzeitig nicht erfüllen. Bei kleiner Einschaltverzögerung wird nämlich der Inter Frame Gap stark und bei großer Einschaltverzögerung gering verkürzt. Bei einer in der Praxis zu verwendenden Taktgenerationsschaltung wird aus diesem Grund ein Kompromiß zwischen beiden Forderungen eingegangen. Beim Baustein T7200 entspricht die Wartezeit zwischen dem Beginn des Datenempfangs und dem Aussenden der synthetischen Präambel, also die Einschaltverzögerung, der statischen Laufzeit, die durch die Anzahl der gepufferten Bits bestimmt ist. Dadurch wird der Inter Frame Gap nur geringfügig verändert. Bei einer Zwischenpufferung von 7 Bits und einer angenommenen Signalgeschwindigkeit von 20 cm/ns verringert sich jedoch die maximale Netzausdehnung in einem CSMA/CD-Netz pro Zwischenverstärkung um ungefähr 140 m.

Gemäß dem Oberbegriff des Anspruchs 1 geht die Erfindung von einem Stand der Technik aus, wie er aus der US-A-4,718,074 und der US-A-4,347,620 bekannt ist. Daraus ist eine Schaltungsanordnung für die Amplituden- und Taktregeneration von kontinuierlich übertragenen digitalen Datensignalen bekannt, bei der ein Empfangstaktsignal aus einem empfangenen Signal abgeleitet wird, die Bits des empfangenen Signals mit dem Empfangstaktsignal in einem Pufferspeicher eingelesen werden, und die Bits mit einem lokalen Sendetaktsignal aus der Pufferspeicher ausgelesen werden, wobei der Phasenunterschied zwischen dem Empfangstaktsignal und dem lokalen Sendetaktsignal ermittelt und die Phase des lokalen Sendetaktsignals in Abhängigkeit des Phasenunterschieds verändert wird. Bei der Übertragung kontinuierlicher, digitaler Datenströme gemäß dieser bekannten Schaltungsanordnung sind Einschaltverzögerungen unbeachtlich. Darüberhinaus tritt bei einer kontinuierlichen Datenübertragung das Problem bei paketweiser Übertragung nicht auf, die Paketabstände möglichst konstant zu halten.

Diese bekannte Schaltungsanordnung betrifft also die Regeneration kontinuierlicher, digitaler Datenströme, nicht jedoch die Übertragung digitaler Signale paketweise und die damit verbundenen Probleme.

Aus der EP-A-263 960 ist ein Verfahren zum Herstellen einer vorgegebenen Phasenbeziehung zwischen dem Ein- und Auslesetakt eines Zwischenspeichers bekannt. Bei Erreichen eines bestimmten Phasenversatzes wird das Auslesen unterbrochen, der Zwischenspeicher, beispielsweise ein FIFO in den Grundzustand versetzt, und es beginnt eine neue Initialisierungsphase. Bezüglich des vom FIFO ausgelesenen, kontinuierlichen Datensignals bedeutet dies, daß der Datenstrom für die Dauer des erneuten Initialisierungsphase unterbrochen wird. Diese Schaltungsanordnung ist daher nur für eine kontinuierliche Datenübertragung geeignet, nicht aber für eine paketweise, da Unterbrechungen in einem amplituden- und taktregenerierten Datenpaket nicht erlaubt sind. Das aus dieser Druckschrift bekannte Regenerierungsverfahren ist daher für eine paketweise Übertragung nicht geeignet.

Aus der EP-A-038 435 ist ebenfalls eine Schaltungsanordnung zur Amplituden- und Taktregeneration von kontinuierlichen Datensignalen bekannt. Eine Kodiersendestufe nimmt die Aufgabe einer Taktableitungs- und Dekodierstufe wahr.

Aus der US-A-5,052,022 ist eine Schaltungsanordnung bekannt, die im wesentlichen dem in Zusammenhang mit Fig. 3 beschriebenen Repeater entspricht.

Der Erfindung liegt daher die Aufgabe zugrunde, ein Verfahren zur Zwischenverstärkung von paketweise zu übertragenden, digitalen Signalen anzugeben, mit dem es möglich ist, den Forderungen an eine Zwischenverstärkung eines paketweise zu übertragenden, digitalen Datensignals zu entsprechen, und insbesondere die Einschaltverzögerung und die Verkürzung des Paketabstands bzw. des Inter-Frame-Gaps mit geringem technischen Aufwand zu minimieren.

Ausgehend von der aus der US-A-4,718,074 bekannten Schaltungsanordnung wird die gestellte Aufgabe durch die kennzeichnenden Merkmale des neuen Anspruchs 1 gelöst.

Bei dem erfindungsgemäßen Verfahren wird sofort nach der Feststellung, daß ein Datenpaket empfangen wird, eine synthetische Präambel ausgesendet, ohne daß dafür eine Synchronisierung zwischen dem Taktsignal des empfangenen Signals und dem lokalen Taktsignal erforderlich ist, die einen gewissen Zeitraum, beispielsweise einen Zeitraum von 10 Bits beansprucht. Dadurch wird eine Zeitverzögerung beim Aussenden des empfangenen Datenpakets vermieden. Erst dann, wenn die Taktsynchronisation zwischen dem empfangenen Taktsignal und dem lokalen Taktsignal abgeschlossen ist, werden die Bits des empfangenen Datenpakets in den Zwischenspeicher ein- und wieder ausgelesen. Aufgrund der jetzt vorliegenden Taktsynchronisation zwischen empfangenem Taktsignal und lokalem Taktsignal erfolgt das Ein- und Auslesen der Bits in den bzw. aus dem Zwischenspeicher mit derselben Taktfrequenz bzw. -phase, sodaß der Zwischenspeicher nur eine sehr kleine Anzahl von Bits, vorzugsweise nur einen Bit, zwischenzuspeichern hat. Der Zwischenspeicher kann daher klein sein, mit der Folge, daß die statische Zeitverzögerung klein gehalten werden kann.

Die erfindungsgemäßen Merkmale ermöglichen es also, daß die Anzahl der zwischenzuspeichernden Bits wesentlich kleiner als bei herkömmlichen Verfahren und Zwischenverstärkern ist. Wie nachfolgend anhand von Ausführungsbeispielen im einzelnen erläutert werden wird, ist es aufgrund der erfindungsgemäßen Maßnahmen und Merkmale möglich, die Beschränkung der maximalen Paketlänge, die gemäß dem CSMA/CD-Zugriffsverfahren nach der IEEE 802.3-Norm 12 144 Bits beträgt, aufzuheben, so daß bei Verwendung des erfindungsgemäßen Zwischenspeicherverfahrens bzw. des erfindungsgemäßen Zwischenspeichers prinzipiell beliebig lange Pakete in einem Netzwerk zuverlässig verarbeitet werden können.

Ein weiterer wichtiger Vorteil der vorliegenden Erfindung besteht darin, daß die Frequenz des Empfangstaktes weit außerhalb des Toleranzbandes, beispielsweise außerhalb des Toleranzbandes von +/- 1 kHz gemäß der IEEE 802.3-Norm liegen kann, ohne daß dadurch die sichere Funktion der Schaltungsanordnung beeinträchtigt wird. Bei dem erfindungsgemäßen Verfahren und Zwischenverstärker hängt die Anzahl der zwischenzuspeichernden Bits nur noch von der Realisierung der Zwischenspeicher ab. Im Gegensatz zu herkömmlichen Zwischenspeichern, bei denen mindestens 7 Bits zwischengespeichert werden müssen, kommt der erfindungsgemäße Zwischenverstärker mit der Zwischenspeicherung von maximal 2 Bits aus.

Gemäß einer bevorzugten Ausführungsform der Erfindung wird die Phase des lokalen Sendetaktsignals so verändert, daß das Empfangstaktsignal und das Sendetaktsignal im wesentlichen übereinstimmen.

Eine alternative Ausführungsform der Erfindung sieht vor das Empfangstaktsignal als Sendetaktsignal zu verwenden, sobald der Phasenunterschied im wesentlichen Null ist. Dadurch ist die Frequenz des Sendetakts gleich der Frequenz des Empfangstakts.

Eine weitere vorteilhafte Ausgestaltung der Erfindung besteht darin, daß n lokale Sendetaktsignale mit 360/n Grad Phasenunterschied zueinander bereitgestellt werden, und daß dasjenige der n lokalen Sendetaktsignale ausgewählt wird, das den geringsten Phasenunterschied zum Empfangstaktsignal aufweist. Durch diese Art der Taktumschaltung steht nach Ende eines Datenpakets ein Sendetakt zur Verfügung, aus dem sich Leitungskontrollsignale ableiten lassen, die zum Empfangstakt des vorhergehenden Datenpakets synchron sind. Solche synchronen Leitungskontrollsignale sind in Entwürfen zur Erweiterung der IEEE 802.3-Norm vorgesehen, die sich mit dem Einsatz optischer Übertragungsstrecken befassen.

Gemäß einer weiteren Ausführungsform der Erfindung wird aus dem aus den n lokalen Sendetaktsignalen ausgewählten Sendetaktsignalen ein nach den digitalen Datensignalen abzusendendes Leitungs- kontrollsignal abgeleitet.

Vorteilhaft ist eine Ausführungsform, bei der das Sendetaktsignal aus dem Empfangstaktsignal abgeleitet wird, wenn der Phasenunterschied einen vorgegebenen Schwellwert unterschreitet.

Gemäß einer sehr vorteilhaften Ausgestaltung der Erfindung wird die Phase des lokalen Sendetaktsignals in Abhängigkeit des Phasenunterschieds spannungsgesteuert.

In diesem Zusammenhang ist es vorteilhaft, wenn ein Momentanwert des Phasenunterschieds als Sollwert für die spannungsgesteuerte Regelung der Phase des lokalen Sendetaktsignals verwendet wird. Der momentane Phasenunterschied zwischen dem Empfangs- und Sendetaktsignal wird von einem Phasenregelkreis konstant gehalten, was zur exakten Angleichung zwischen den Frequenzen von Sende- und Empfangstakt führt.

Aus dem spannungsgesteuerten Sendetaktsignal wird vorzugsweise ein nach dem digitalen Signal abzusendendes Leitungskontrollsignal abgeleitet. Der Vorteil hierbei ist, daß sich die Frequenz des Sendetaktsignals kontinuierlich und nicht sprunghaft in dem zugelassenen Toleranzbereich ändert.

Besonders vorteilhaft ist eine Ausführungform, bei der das Empfangstaktsignal um eine Zeitdauer verzögert wird, die größer oder gleich einer Zeitdauer ist, die der zwischengespeicherten Bitanzahl enspricht. Dadurch ist sichergestellt, daß der Pufferspeicher am Ende eines Datenpakets vollständig ausgelesen wird. Anstelle einer unabhängigen Zeitverzögerung ist vorteilhafterweise vorgesehen, die Verzögerung in Zusammenhang mit der Taktableitung vorzunehmen.

Im Zusammenhang mit der vorliegenden Erfindung ist es vorteilhaft, wenn eine Decodierung der Daten des Empfangssignals und eine Codierung der aus dem Pufferspeicher ausgelesenen Daten erfolgt.

Die Codierung ist vorzugsweise eine Codierung, welche eine Taktableitung ermöglicht.

Bei einer vorhandenen Präambel werden die durch die Taktableitung auftretenden Längenverluste ausgeglichen.

Die Ableitung des Empfangstaktsignals erfolgt vorzugsweise mittels eines Phasenregelkreises.

Die vorliegende Erfindung ist insbesondere mit Vorteil bei einem CSMA/CD-Zugriffsverfahren nach der IEEE 802.3-Norm einsetzbar.

Die der Erfindung zugrundeliegende Aufgabe wird auch mit einem Zwischenverstärker für digitale Signale und mit einer Amplituden-Regenerationsschaltung, wobei letzterer eine Empfangstaktsignal-Ableitungsschaltung, einen Pufferspeicher, eine Steuerschaltung und einen lokalen Sendetaktsignal-Generator aufweist, gelöst durch die paketweise Übertragung digitaler Signale und durch einen Präambel-Generator, der eine synthetische Präambel abgibt, wenn eine Taktableitungs- und Dekodierungsstufe ein dem Erkennen eines einlaufenden Datenpakets entsprechendes Ausgangssignal erzeugt, bevor die Taktableitungs- und Dekodierungsstufe den Taktableitungsvorgang abgeschlossen hat.

Mittels eines Taktsignalumschalters, der das Empfangstaktsignal als Sendetaktsignal durchschaltet, wenn der Phasenunterschied einen vorgegebenen Schwellwert unterschreitet oder wenn der Phasenunterschied vorzugsweise 0 ist, wird das Empfangstaktsignal als Sendetaktsignal eingesetzt. Da-durch ist die Frequenz des Sendetaktsignals gleich der Frequenz des Empfangstaktsignals. Die maximale Paketlänge kann daher prinzipiell beliebig lang sein, ohne daß da- durch die Funktion des Zwischenverstärkers in Frage ge- stellt ist. Weiterhin ist es damit möglich, die Zwischen-verstärkung auch dann vorzunehmen, wenn die Frequenz des Empfangstaktsignales weit außerhalb des Toleranzbandes liegt. Die Anzahl der zwischenzuspeichernden Bits hängt daher nur noch von der Realisierung des Zwischenpuffers ab, so daß es möglich ist, nur noch höchstens 2 Bits zwischenzuspeichern. Dadurch kann sowohl die Einschaltverzögerung als auch die Verkürzung des Inter Frame Gaps minimiert werden.

Eine vorteilhafte Ausführungsform der Erfindung besteht darin, daß ein lokaler Sendetaktgenerator n Ausgänge aufweist, an denen jeweils lokale Sendetaktsignale mit 360/n Grad Phasenunterschied zueinander bereitgestellt werden.

Vorzugsweise wählt eine Sendetaktsignal-Auswahlschaltung dasjenige der n lokalen Sendetaktsignale aus, das den geringsten Phasenunterschied zum Empfangstaktsignal aufweist.

Bei einer alternativen Ausführungsform der Erfindung ist der lokale Sendetaktsignalgenerator ein spannungsgesteuerter Oszillator. In Zusammenhang damit ist ein Abtast- und Halteglied zur Speicherung eines Momentanwerts des Phasenvergleicherausgangssignals vorgesehen.

Der spannungsgesteuerte Oszillator ist vorzugsweise ein quarzstabilisierter Oszillator.

Vorteilhafterweise ist der Pufferspeicher ein asynchroner First-In-First-Out (FIFO) - Pufferspeicher.

Die Erfindung wird nachstehend anhand der Zeichnunge n beispielsweise näher erläutert. Es zeigen:
- Fig. 1: eine schematische Darstellung eines herkömmlichen CSMA/CD-Rechnernetzes,
- Fig. 2: Signalverläufe in schematischer Darstellung zur Erläuterung des Phasenzitterns,
- Fig. 3: die Grundstruktur einer herkömmlichen Schaltungsanordnung für die Taktsignalregeneration in einem Zwischenverstärker,
- Fig. 4: schematische räumliche Darstellungen von Datenpaketen zur Erläuterung von Änderungen, die das Datenpaket durch den in Fig. 3 darstellten Zwischenverstärker erfährt,
- Fig. 5: eine gegenüber der in Fig. 3 dargestellten Schaltungsanordnung erweiterten herkömmlichen Taktregenerationsschaltung,
- Fig. 6: schematische räumliche Darstellungen von Datenpaketen zur Erläuterung von Änderungen, die das Datenpaket durch den in Fig. 5 dargestellten Zwischenverstärker erfährt,
- Fig. 7: eine Ausführungsform des erfindungsgemäßen Zwischenverstärkers und
- Fig. 8: eine weitere Ausführungsform des erfindungsgemäßen Zwischenverstärkers.

In Fig. 7 ist eine Ausführungsform einer Taktregenerationsschaltung für einen erfindungsgemäßen Zwischenverstärker dargestellt. Schaltungsteile in Fig. 7, die denen von Fig. 5 entsprechen, sind mit denselben Bezugszeichen versehen und sollen nicht nochmals erläutert werden.

Das an der Leitung 35 anliegende Empfangstaktsignal wird über eine Leitung 63 einem Phasenvergleicher 64, einer Taktverzögerungsstufe 65 und einer Taktauswahlstufe 66 zugeleitet, der über eine Leitung 67 weiterhin Steuersignale bereitgestellt werden. Ein Taktsignalgenerator 68 weist n Ausgänge 69-1, 69-2 .... 69-n auf, an denen jeweils Taktsignale bereitgestellt werden, die zueinander einen Phasenunterschied von 360/n Grad aufweisen. Diese n Taktsignale werden der Taktauswahlstufe 66 bereitgestellt. Ausgangssignale der Taktauswahlstufe 66 gelangen über eine Leitung 70 an einen Taktsignalumschalter 71 und den Phasenvergleicher 64. Der Phasenvergleicher 64 stellt ein Ausgangssignal der Steuerschaltung 37 über eine Leitung 72 bereit. Ein Ausgang der Steuerschaltung 37 ist über eine Leitung 73 weiterhin mit einem Eingang des Taktsignalschalters 71 verbunden. Die Taktverzögerungsstufe 65 liefert dem Taktsignalumschalter 71 über die Leitung 74 ein verzögertes Empfangstaktsignal. Über eine Leitung 75 gelangt das Ausgangssignal des Taktsignalumschalters 71 an den Codierer 39.

Der Phasenvergleicher 64 ermittelt den Phasenunterschied zwischen dem von der Taktauswahlstufe 66 bereitgestellten lokalen Taktsignal und dem durch die Taktableitungs- und Codierungsstufe 32 ermittelten Empfangstaktsignal. Unterschreitet der Phasenunterschied einen vorgegebenen Schwellwert, der gegen Null gehen kann, wird dies der Steuerschaltung 37 über die Leitung 72 mitgeteilt.

Nach Ende eines Datenpakets wird das Empfangstaktsignal - wie anhand von Fig. 3 erläutert wurde - unmittelbar deaktiviert. Werden n Bits zwischengespeichert und wird aus dem Empfangstaktsignal direkt das Sendetaktsignal abgeleitet, so muß das Empfangstaktsignal daher mindestens um n Bitzeiten verzögert werden, um am Ende eines Datenpakets den Pufferspeicher 34 vollständig auslesen zu können. Dies geschieht durch die Taktverzögerungsstufe 65. Prinzipiell kann diese Aufgabe auch direkt von der Taktableitungs- und Decodierungsstufe 32 übernommen werden, so daß dann auf die Taktverzögerungsstufe 65 verzichtet werden kann.

In Abhängigkeit von dem an der Leitung 73 auftretenden Ausgangssignal der Steuerschaltung 37 stellt der Taktsignalumschalter 71 entweder das lokale Taktsignal oder das verzögerte Empfangstaktsignal bereit, das über die Leitung 75 an den Codierer 39 gelangt.

Der Taktauswahlschalter 66 schaltet in Abhängigkeit von dem von der Steuerschaltung 37 über die Leitung 67 bereitgestellten Steuersignal dasjenige der n Oszillatorsignale zu ihrem Eingang durch, welches den geringsten Phasenunterschied zum Empfangstaktsignal aufweist.

Zu Beginn des Empfangs eines Datenpakets entspricht die Funktionsweise vollständig der der in Fig. 5 dargestellten Taktregenerationsschaltung. Bei Beginn des Wiederaussendens der empfangenen Präambel in der bereits erläuterten Weise kann der Phasenunterschied zwischen dem Empfangstaktsignal am Eingang des Pufferspeichers 34 und dem Auslesetaktsignal am Ausgang des Pufferspeichers 34, das dem Sendetaktsignal entspricht, zwischen 0 Grad und 360 Grad liegen. Wegen des Frequenzunterschieds zwischen dem Empfangstaktsignal und dem lokalen Taktsignal kann der Phasenunterschied im Verlauf des Datenempfangs auf 0 Grad ab- oder auf 360 Grad zunehmen, so daß dann der Zustandswechsel beider Taktsignale synchron ist. Dies wird vom Phasenvergleicher 64 erkannt und der Steuerschaltung 37 mitgeteilt, die daraufhin den Taktsignalumschalter 71 veranlaßt, vom lokalen Taktsignal auf das Empfangstaktsignal umzuschalten. Von diesem Zeitpunkt an sind die Frequenzen des Empfangs- und des Auslese- bzw. Sendetaktsignals identisch. Es entfällt daher die Notwendigkeit, zum Ausgleich von Freuquenzdifferenzen Bits zwischenzuspeichern, die bei herkömmlichen Zwischenverstärkern erforderlich sind. Es kann daher die Zwischenspeicherung von mindestens 3 Bit, wie dies in Zusammenhang mit herkömmlichen Schaltungen bereits beschrieben wurde, entfallen. Der Pufferspeicher 34 muß daher nur noch den Phasenunterschied zwischen dem Empfangs- und Auslese- bzw. Sendetaktsignal ausgleichen, also 1 Bit.

Am Ende eines Datenpakets stellt die Taktauswahlstufe 66 dasjenige der n Ausgangssignale des Oszillators als lokales Taktsignal zur Verfügung, das den geringsten Phasenunterschied zum Empfangstaktsignal aufweist. Nach vollständigem Auslesen des Pufferspeichers 54 schaltet der Taktsignalschalter 71 das lokale Taktsignal an seinen Ausgang durch. Der beim Umschalten entstehende Phasensprung im Sendetaktsignal hängt von der Anzahl der Ausgänge des Oszillators ab und kann daher prinzipiell beliebig klein gehalten werden. Durch die Taktumschaltung steht am Ende eines Datenpakets ein Sendetaktsignal zur Verfügung, aus dem sich Leitungskontrollsignale ableiten lassen, die zum Empfangstaktsignal des vorhergehenden Datenpakets synchron sind. Derartige synchrone Leitungskontrollsignale sind in Entwürfen zur Erweiterung der IEEE 802.3-Norm vorgesehen, die sich mit dem Einsatz optischer Übertragungsstrecken befassen.

Wenn keine Leitungskontrollsignale gesendet werden sollen, kann auf die Taktauswahl verzichtet werden. In diesem Falle reicht es aus, wenn der Oszillator nur ein Ausgangssignal bereitstellt.

Das Ein- bzw. Auslesen der Daten in bzw. aus dem Datenspeicher 34 erfolgt jeweils während der positiven Flanke des Empfangs- bzw. des Sendetaktsignals. Wenn das Empfangstaktsignal und das Sendetaktsignal zueinander in Phase liegen, kann dasjenige Bit mit der positiven Flanke des Sendetaktsignals ausgelesen werden, das eine Taktperiode früher eingelesen wurde. Dies bedeutet, daß mindestens ein Bit zwischengespeichert werden muß. Im allgemeinen Fall wird ein Bit nach mehr als einer Bitzeit nach dem Einlesen wieder ausgelesen. Durch allmähliche Vergrößerung der Phasenverschiebung auf 360 Grad kann diese Verzögerungszeit auf maximal zwei Bitzeiten anwachsen. Dies bedeutet, daß maximal zwei Bits zwischengespeichert werden müssen.

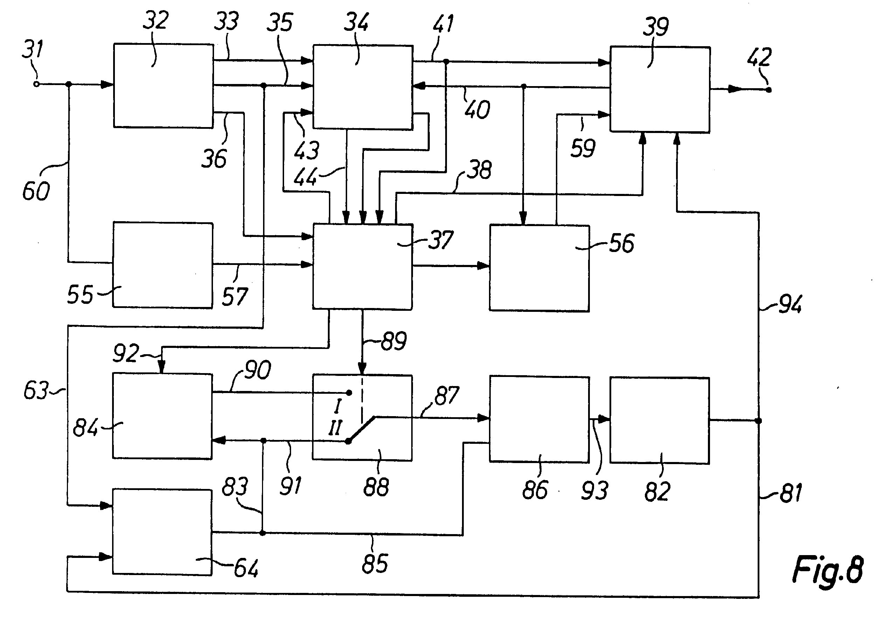

Fig. 8 zeigt ein weiteres vorteilhaftes Ausführungsbeispiel der Erfindung.

Schaltungsteile von Fig. 8, die denen der bereits erläuterten Schaltungen entsprechen, sind mit denselben Bezugszeichen versehen und werden nicht nochmals erläutert.

Dem Phasendetektor 64 wird über die Leitung 63 das an der Leitung 35 anliegende Empfangstaktsignal und über eine Leitung 81 das Ausgangssignal eines spannungsgesteuerten Oszillators 82 zugeleitet. Das Ausgangssignal des Phasenvergleichers 64 gelangt über eine Leitung 83 an einen Eingang eines Abtast- und Halteglieds 84 sowie über eine Leitung 85 an den Istwert-Eingang eines Reglers 86. Der Sollwert-Eingang des Reglers 86 ist über eine Leitung 87 mit dem Ausgang eines Schalter 88 verbunden, der über ein von der Steuerschaltung an der Leitung 89 bereitgestelltes Umschaltsignal aus einer Schalterstellung I in eine Schalterstellung II und umgekehrt umgeschaltet werden kann. Der Anschluß für die Schalterstellung I ist mit dem Ausgang des Abtast- und Halteglieds 84 über eine Leitung 90, und der Anschluß für Schalterstellung II ist mit dem Eingang des Abtast- und Halteglieds 84, an dem auch das Ausgangssignal des Phasenvergleichers 64 anliegt, über eine Leitung 91 verbunden. Ein weiterer Eingang des Abtast- und Halteglieds 84 steht über eine Leitung 92 mit der Steuerschaltung 37 in Verbindung.

Der Regler 86 gibt ein Ausgangssignal über die Leitung 93 an den spannungsgesteuerten Oszillator 82 ab, dessen Ausgangssignal als Sendetaktsignal nicht nur dem Phasenvergleicher 84 über die Leitung 81, sondern auch dem Codierer 39 über die Leitung 94 bereitgestellt wird.

Der Phasenvergleicher 64 stellt dem Regler 86 und dem einen Eingang des Abtast- und Halteglieds 84 ein Signal bereit, das dem Phasenunterschied zwischen dem Sende- und Empfangstaktsignal entspricht. In Abhängigkeit von einem Steuersignal der Steuerschaltung 37 speichert das Abtast- und Halteglied einen Momentanwert des Ausgangssignals des Phasenvergleichers 64 und stellt ihn an seinem Ausgang zur Verfügung, der über die Leitung 90 mit dem Anschluß der Schalterstellung I des Umschalters 88 verbunden ist. Der Umschalter 88 schaltet in Abhängigkeit von dem über die Leitung 89 von der Steuerschaltung 37 bereitgestellten Umschaltsignal entweder das Ausgangssignal des Phasenvergleichers 64 oder den momentan vom Abtast- und Halteglied 84 gespeicherten Wert des Ausgangssignals des Phasenvergleichers 64 an seinen Ausgang durch, das dann den Sollwert für den Regler 86 bildet. Der Regler 86 stellt dem spannungsgesteuerten Oszillator 82 ein Ausgangssignal bereit, das proportional zur Differenz seiner beiden Eingangssignale ist.

Der spannungsgesteuerte Oszillator liefert ein Signal, dessen Freuquenz vom Ausgangssignal des Reglers abhängt. Voraussetzung ist dabei, daß seine Mittenfrequenz innerhalb der geforderten Toleranzzone liegt, die nach der IEEE 802.3-Norm +/- 1 kHz beträgt. Diese Toleranzforderung läßt sich mit quarzstabilisierten, spannungsgesteuerten Oszillatoren, sog. VCXO, erreichen. Auf diese Weise ergibt sich ein Phasenregelkreis, dessen Ausgangsfrequenz entweder gleich der Mittenfrequenz des VCXO's ist - Schalterstellung II - oder dessen Ausgangsfrequenz gleich der Frequenz des Empfangstaktsignals ist - Schalterstellung I - , wobei der Phasenunterschied zwischen dem Sende- und Empfangstaktsignal vom Ausgangssignal des Abtast- und Halteglieds 84 bestimmt ist.

Im Ruhezustand, wenn also kein Datenpaket empfangen wird, befindet sich der Umschalter 88 in der Stellung II; die Regeldifferenz am Eingang des Reglers 86 ist Null. Der VCXO schwingt daher auf seiner Mittenfrequenz.

Zu Beginn des Empfangs eines Datenpakets entspricht die Funktionsweise der der Taktregenerationsschaltung gemäß Fig. 7. Eine ausreichend lange Zeit nach Ende des Synchronisierungsvorgangs der Taktableitung, deren Dauer von den dynamischen Eigenschaften des Phasenvergleichers 64 abhängt, wird der momentane Wert des Ausgangssignals des Phasenvergleichers 64 gespeichert und der Umschalter 88 in die Schalterstellung I gebracht. Der momentane Phasenunterschied zwischen dem Sende- und Empfangstaktsignal wird daraufhin vom Phasenregelkreis konstant gehalten.

Dies führt daher zu einer exakten Angleichung der Frequenzen des Sende- und Empfangstaktsignals.

Am Ende eines Datenpakets wird der Umschalter wieder in die Schalterstellung II gebracht, worauf sich die Frequenz des VCO's wieder seiner Mittenfrequenz angleicht.

Entsprechend den in Zusammenhang mit Fig. 7 gemachten Ausführungen zur Aussendung von Leitungskontrollsignalen lassen sich auch mit dem in Fig. 8 dargestellten Ausführungsbeispiel nach Ende eines Datenpakets Leitungskontrollsignale aus dem Sendetaktsignal ableiten. Die Leitungskontrollsignale sind zum Empfangstaktsignal des vorangegangenen Datenpakets synchron. Im Vergleich zum Ausführungsbeispiel gemäß Fig. 7 weist die Schaltungsanordnung gemäß Fig. 8 den zusätzlichen Vorteil auf, daß sich die Frequenz des Sendetaktsignals kontinuierlich und nicht sprunghaft im zulässigem Toleranzbereich ändert.

Die vorliegende Erfindung wurde anhand bevorzugter Ausführungsbeispiele beschrieben. Dem Fachmann sind jedoch Abwandlungen und Ausgestaltungen möglich. Beispielsweise ist der Pufferspeicher 34 vorzugsweise ein asynchroner First-In-First-Out(FIFO)-Pufferspeicher. Obgleich die erfindungsgemäßen Maßnahmen und Merkmale in Zusammenhang mit allen Zwischenverstärkern für digitale Übertragungssysteme anwendbar sind, ist die vorliegende Erfindung mit dem CSMA/CD-Zugriffsverfahren und insbesondere nach der IEEE 802.3-Norm besonders vorteilhaft.

## Patentansprüche

1. Verfahren zur Zwischenverstärkung von digitalen Signalen, mit einer Amplituden- und einer Taktregeneration, wobei die Taktregeneration folgende Verfahrensschritte aufweist:
- Ableitung eines Empfangstaktsignals aus einem empfangenen Signal,
- Einlesen der Bits des empfangenen Signals mit dem Empfangstaktsignal in einen Pufferspeicher und
- Auslesen der Bits mit einem lokalen Sendetaktsignal aus dem Pufferspeicher,
- Ermitteln des Phasenunterschieds zwischen dem Empfangstaktsignal und dem lokalen Sendetaktsignal, und
- Verändern der Phase des lokalen Sendetaktsignals in Abhängigkeit des Phasenunterschieds,
dadurch gekennzeichnet, daß die digitalen Signale paketweise übertragen werden, und daß eine -synthetische Präambel im wesentlicher unmittelbar nach Ernennen eines einlaufenden Datenpakets und vor Abschluß der Taktableitung aus dem einlaufenden Datensignal ausgesendet wird.

2. Verfahren nach Anspruch 1, dadurch gekennzeichnet, daß die Phase des lokalen Sendetaktsignals so verändert wird, daß das Empfangstaktsignal und das Sendetaktsignal im wesentlichen übereinstimmen.

3. Verfahren nach Anspruch 1 oder 2, dadurch gekennzeichnet, daß das Empfangstaktsignal als Sendetaktsignal verwendet wird, sobald der Phasenunterschied im wesentlichen Null ist.

4. Verfahren nach einem der Ansprüche 1 bis 3, dadurch gekennzeichnet, daß n lokale Sendetaktsignale mit 360/n Grad Phasenunterschied zueinander bereitgestellt und daß dasjenige der n lokalen Sendetaktsignale ausgewählt wird, das den geringsten Phasenunterschied zum Empfangstaktsignal aufweist.

5. Verfahren nach einem der Ansprüche 1 bis 4, dadurch gekennzeichnet, daß aus dem aus den n lokalen Sendetaktsignalen ausgewählten Sendetaktsignal ein nach den digitalen Datensignalen abzusendendes Leitungskon-trollsignal abgeleitet wird.

6. Verfahren nach einem der Ansprüche 1 bis 5, dadurch gekennzeichnet, daß das Sendetaktsignal aus dem Empfangstaktsignal abgeleitet wird, wenn der Phasenunterschied einen vorgegebenen Schwellwert unterschreitet.

7. Verfahren nach einem der Ansprüche 1 bis 3 und 6, dadurch gekennzeichnet, daß die Phase des lokalen Sendetaktsignals in Abhängigkeit des Phasenunterschieds spannungsgesteuert wird.

8. Verfahren nach Anspruch 7, dadurch gekennzeichnet, daß ein Momentwert des Phasenunterschieds als Sollwert für die spannungsgesteuerte Regelung der Phase des lokalen Sendetaktsignals verwendet wird.

9. Verfahren nach Anspruch 7 oder 8, dadurch gekennzeichnet, daß aus dem spannungsgesteuerten Sendetaktsignal ein nach dem digitalen Signal abzusendendes Leitungskontrollsignal abgeleitet wird.

10. Verfahren nach einem der Ansprüche 1 bis 9, dadurch gekennzeichnet, daß das Empfangstaktsignal um eine Zeitdauer verzögert wird, die größer oder gleich einer Zeitdauer ist, die der zwischengespeicherten Bitanzahl enspricht.

11. Verfahren nach Anspruch 10, dadurch gekennzeichnet, daß die Verzögerung im Zusammenhang mit der Taktableitung erfolgt.

12. Verfahren nach einem der Ansprüche 1 bis 11, dadurch gekennzeichnet, daß eine Decodierung der Daten des Empfangssignals und eine Codierung der aus dem Pufferspeicher ausgelesenen Daten erfolgt.

13. Verfahren nach einem der Ansprüche 1 bis 12, dadurch gekennzeichnet, daß eine Codierung vorgesehen ist, welche eine Taktableitung ermöglicht.

14. Verfahren nach einem der Ansprüche 1 bis 13, dadurch gekennzeichnet, daß bei einer vorhandenen Präambel die durch die Taktableitung auftretenden Längenverluste ausgeglichen werden.

15. Verfahren nach einem der Ansprüche 1 bis 14, dadurch gekennzeichnet, daß die Ableitung des Empfangstaktsignals mittels eines Phasenregelkreises erfolgt.

16. Verfahren nach einem der Ansprüche 1 bis 15, dadurch gekennzeichnet, daß das Verfahren in Zusammenhang mit einem CSMA/CD-Zugriffsverfahren nach der IEEE 802.3-Norm verwendet wird.

17. Zwischenverstärker für digitale Signale, mit einer Amplituden- und einer Takt-Regenerationsschaltung, wobei letztere eine Empfangstaktsignal-Ableitungsschaltung (32), einen Pufferspeicher (34), eine Steuerschaltung (37) und einen lokalen Sendetaktsignal-Generator (68) aufweist, gekennzeichnet durch die paketweise Übertragung digitaler Signale und durch einen Preambel-Generator (56), der eine synthetische Preambel abgibt, wenn eine Taktableitungs- und Dekodierungsstufe (32) ein dem Erkennen eines einlaufenden Datenpakets entsprechendes Ausgangssignal erzeugt, bevor die Taktableitungs- und Dekodierungsstufe (32) den Taktableitungsvorgang abgeschlossen hat.

18. Zwischenverstärker nach Anspruch 17, gekennzeichnet durch einen Taktsignalumschalter (71), der das Empfangstaktsignal als Sendetaktsignal durchschaltet, wenn der Phasenunterschied einen vorgegebenen Schwellwert unterschreitet.

19. Zwischenverstärker nach Anspruch 17 oder 18, dadurch gekennzeichnet, daß ein lokaler Sendetaktsignal-Generator (68) die Ausgänge (69-1, 69-2 ... 69-n) aufweist, an denen jeweils lokale Sendetaktsignale mit 360/n Grad Phasenunterschied zueinander bereitgestellt werden.

20. Zwischenverstärker nach Anspruch 21, gekennzeichnet durch eine Sendetaktsignal-Auswahlstufe (66), die dasjenige der n lokalen Sendetaktsignale auswählt, das den geringsten Phasenunterschied zum Empfangstaktsignal aufweist.

21. Zwischenverstärker nach Anspruch 17 oder 18, dadurch gekennzeichnet, daß die Taktgenerationsschaltung (82) ein spannungsgesteuerter Oszillator ist.

22. Zwischenverstärker nach Anspruch 21, gekennzeichnet durch ein Abtast- und Halteglied (84) zur Speicherung eines Momentanwerts-Ausgangssignals des Phasenvergleichers (64).

23. Zwischenverstärker nach Anspruch 21 oder 22, dadurch gekennzeichnet, daß der spannungsgesteuerte Oszillator (82) ein quarzstabilisierter spannungsgesteuerter Oszillator ist.

24. Zwischenverstärker nach einem der Ansprüche 18 bis 23, dadurch gekennzeichnet, daß der Pufferspeicher (34) ein asynchroner First-In-First-Out(FIFO)-Pufferspeicher ist.

## Claims

1. A method for the intermediate amplification of digital signals, with an amplitude regeneration and a pulse regeneration, wherein the pulse regeneration includes the following steps;
- derivation of a receiving pulse signal from a receiving signal,
- read in of the bits of the receiving signal having the receiving pulse signal into a buffer storage and
- read out of the bits with a local transmitting pulse signal from the buffer storage,
- determination of the phase difference between the receiving pulse signal and the local transmitting pulse signal and
- change in the phase of the local transmitting pulse signal in dependence upon the phase difference,
- characterised in that the digital signals are transmitted in packets, and in that a synthetic preamble is transmitted substantially directly after an incoming data packet has been recognised and prior to the completion of the pulse derivation from the incoming data signal.

2. A method according to claim 1, characterised in that the phase of the local transmitting pulse signal is changed in such a way that the receiving pulse signal and the transmitting pulse signal substantially match each other.

3. A method according to claims 1 or 2, characterised in that the receiving pulse signal is used as a transmitting pulse signal as soon as the phase difference is substantially zero.

4. A method according to any of claims 1 to 3, characterised in that n local transmitting pulse signals having a 360/n degree phase difference to each other are available, and that the local transmitting pulse signal which has the smallest phase difference to the receiving pulse signal is selected.

5. A method according to any of claims 1 to 4, characterised in that a line control signal, which is to be transmitted after the digital data signals, is derived from the transmitting pulse signal selected from the n local transmitting pulse signals.

6. A method according to any of claims 1 to 5, characterised in that the transmitting pulse signal is derived from the receiving pulse signal, if the phase difference is below a predetermined threshold value.

7. A method according to any of claims 1 to 3 and 6, characterised in that the phase of the local transmitting pulse signals is voltage controlled in dependence upon the phase difference.

8. A method according to claim 7, characterised in that a momentary value of the phase difference is used as an intended value for the voltage controlled control of the phase of the local transmitting pulse signal.

9. A method according to claims 7 or 8, characterised in that a line control signal, which is to be transmitted after the digital signal, is derived from the voltage controlled transmitting pulse signal.

10. A method according to any of claims 1 to 9, characterised in that the receiving pulse signal is delayed by a period of time, which is greater or equal to a period of time which corresponds to the intermediate stored number of bits.

11. A method according to claim 10, characterised in that the delay takes place in conjunction with the pulse derivation.

12. A method according to any of claims 1 to 11, characterised in that a decoding of the data of the receiving signal is carried out together with a coding of the data read out from the buffer storage.

13. A method according to any of claims 1 to 12, characterised in that it is possible to carry out a coding which facilitates a pulse derivation.

14. A method according to any of claims 1 to 13, characterised in that with an existing preamble the losses in length occuring during the pulse derivation are compensated.

15. A method according to any of claims 1 to 14, characterised in that the receiving pulse signal is derived by means of a phase control loop.

16. A method according to any of claims 1 to 15, characterised in that the method is used in conjunction with a CSMA/CD access method according to the IEEE 802.3 standard.

17. An intermediate amplifier for digital signals, with an amplitude regeneration circuit and a pulse regeneration circuit, wherein the pulse regeneration circuit includes a receiving pulse signal derivation circuit (32), a buffer storage (34), a control circuit (37) and a local transmitting pulse signal (68), characterised by the transmission of digital signals in packets and by a preamble generator (56), which produces a synthetic preamble when a pulse derivation and decoding stage (32) produces an output signal corresponding to the recognition of an incoming data packet, before the pulse derivation and decoding stage (32) has completed the pulse derivation process.

18. An intermediate amplifier according to claim 17, characterised by a pulse signal switch (71) which switches the receiving pulse signal through as a transmitting pulse signal when the phase difference is below a predetermined threshold value.

19. An intermediate amplifier in accordance with claims 17 or 18, characterised in that a local transmitting pulse signal generator (68) includes the outputs (69-1, 69-2 ... 69-n) and in each case local transmitting pulse signals having a 360/n degree phase difference to each other are available at the said outputs.

20. An intermediate amplifier according to claim 21, characterised by means of a transmitting pulse signal selection stage (66), which selects the particular signal of the n local transmitting pulse signals that has the smallest phase difference to the receiving pulse signal.

21. Intermediate amplifier according to claim 17 or 18, characterised in that the pulse generating circuit (82) is a voltage controlled oscillator.

22. Intermediate amplifier according to claim 21, characterised by a scanning and retaining member (84) for the purpose of storing a momentary value output signal of the phase compensator (64).

23. An intermediate amplifier according to claims 21 or 22, characterised in that the voltage controlled oscillator (82) is a quartz-stabilised voltage controlled oscillator.

24. An intermediate amplifier according to any of claims 18 to 23, characterised in that the buffer storage is a non-synchronous first-in-first-out (FIFO) buffer storage.

## Revendications

1. Procédé d'amplification intermédiaire de signaux numériques avec une régénération en amplitude et une régénération en synchronisme, la régénération en synchronisme les étapes de procédé suivantes :
- Dérivation d'un signal de cadencement de réception à partir d'un signal reçu,
- lecture des bits du signal reçu à l'aide du signal de cadencement de réception, dans une mémoire tampon et,
- lecture des bits à l'aide d'un signal de cadencement d'émission locale, à partir de la mémoire tampon,
- détermination de la différence de phase entre le signal de cadencement de réception et le signal de cadencement d'émission locale, et,
- modification de la phase du signal de cadencement d'émission locale, en fonction de la différence de phase,
caractérisé en ce que les signaux numériques sont transmis par paquets et qu'un préambule synthétique est envoyé, pratiquement immédiatement après identification d'un paquet de données qui arrive et avant l'achèvement de la dérivation de cadence à partir du signal de données en train d'arriver.

2. Procédé selon la revendication 1, caractérisé en ce que la phase du signal de cadencement d'émission locale est modifiée de telle façon que le signal de cadencement de réception et le signal de cadencement d'émission coïncident pratiquement.

3. Procédé selon la revendication 1 ou 2, caractérisé en ce que le signal de cadencement de réception est utilisé comme signal de cadencement d'émission, dès que la différence de phase est pratiquement nulle.

4. Procédé selon l'une des revendications 1 à 3, caractérisé en ce que n signaux de cadencement d'émissions locaux sont préparés avec, entre eux, une différence de phase valant 360/n degrés et en ce qu'est choisi, parmi les n signaux de cadencement d'émission locaux, celui qui présente la différence de phase la plus faible par rapport au signal de cadencement d'émission.

5. Procédé selon l'une des revendications 1 à 4, caractérisé en ce qu'à partir du signal de cadencement d'émission sélectionné parmi les n signaux de cadencement d'émission locaux, on dérive un signal de contrôle de ligne, à envoyer après les signaux de données numériques.

6. Procédé selon l'une des revendications 1 à 5, caractérisé en ce que le signal de cadencement d'émission est dérivé du signal de cadencement de réception lorsque la différence de phase descend en dessous d'une valeur de seuil prédéterminée.

7. Procédé selon l'une des revendications 1 à 3 et 6, caractérisé en ce que la phase des signaux de cadencement d'émission locaux est commandée en tension en fonction de la différence de phase.

8. Procédé selon la revendication 7, caractérisé en ce qu'une valeur instantanée de la différence de phase est utilisée comme valeur de consigne pour opérer la régulation, commandée en tension, de la phase du signal de cadencement d'émission locale.

9. Procédé selon la revendication 7 ou 8, caractérisé en ce qu'à partir du signal de cadencement d'émission, commandée en tension, on dérive un signal de contrôle de conducteurs à envoyer après le signal numérique.

10. Procédé selon l'une des revendications 1 à 9, caractérisé en ce que le signal de cadencement de réception est retardé d'une durée supérieure ou égale à une durée correspondant aux nombres de bits ayant fait l'objet d'une mise en mémoire intermédiaire.

11. Procédé selon la revendication 10, caractérisé en ce que le retard est effectué en liaison avec la dérivation de cadencement.

12. Procédé selon l'une des revendications 1 à 11, caractérisé en ce qu'un décodage des données du signal de réception et un codage des données lues dans la mémoire tampon sont effectués.

13. Procédé selon l'une des revendications 1 à 12, caractérisé en ce qu'est prévu un codage permettant une dérivation de cadence.

14. Procédé selon l'une des revendications 1 à 13, caractérisé en ce qu'en cas d'existence d'un préambule, les pertes de longueur se manifestant du fait de la dérivation de cadence sont compensées.

15. Procédé selon l'une des revendications 1 à 14, caractérisé en ce que la dérivation du signal de cadencement de réception s'effectue au moyen d'un circuit de régulation de phase.

16. Procédé selon l'une des revendications 1 à 15, caractérisé en ce que le procédé est utilisé en liaison avec un procédé d'accès CSMA/CO, suivant la norme IEEE 802. 3.

17. Amplification intermédiaire pour signaux numériques, avec un circuit de régénération d'amplitude et un circuit de régénération de cadence, ce dernier présentant un circuit de dérivation de signal de cadencement de réception (32), une mémoire tampon (34), un circuit de commande (37) et un générateur local de signaux de cadencement d'émission (68) caractérisée par la transmission par paquets de signaux numériques et par un générateur de préambules (56), qui délivre un préambule synthétique, lorsqu'un étage de dérivation de cadence et de décodage (32) produit un signal de sortie correspondant à l'identification d'un paquet de données en train d'arriver, avant que l'étage de dérivation de cadence et de décodage (32) ait terminé le processus de dérivation de cadence.

18. Amplificateur intermédiaire selon la revendication 17, caractérisé par un commutateur de signal de cadencement (71) assurant la commutation du signal de cadencement de réception à titre de signal de cadencement d'émission, lorsque la différence de phase descend au dessous d'une valeur de seuil prédéterminée.

19. Amplificateur intermédiaire selon la revendication 17 ou 18, caractérisé en ce qu'un générateur de signal d'émission locale (68) présente des sorties ( 69-1, 69-2, ... 69-n) sur lesquelles chaque fois sont préparés des signaux de cadencement d'émissions locaux présentant entre eux une différence de phase égale à 360/n degrés.

20. Amplificateur intermédiaire selon la revendication 21, caractérisé par un étage de sélection de signal de cadencement d'émission (66), assurant la sélection, parmi des n signaux de cadencement d'émissions locaux n, de celui qui présente la plus petite différence de phase par rapport au signal de cadencement de réception.

21. Amplificateur intermédiaire selon la revendication 17 ou 18, caractérisé en ce que le circuit de génération de cadence (82) est un oscillateur commandé en tension.

22. Amplificateur intermédiaire selon la revendication 21, caractérisé par un organe de balayage et de maintien (84) destiné à stocker en mémoire un signal de sortie de valeur instantanée du comparateur de phase (64).

23. Amplificateur intermédiaire selon la revendication 21 ou 22, caractérisé en ce que l'oscillateur commandé en tension (82) est un oscillateur commandé en tension, stabilisé par un quartz.

24. Amplificateur intermédiaire selon l'une des revendications 18 à 23, caractérisé en ce que la mémoire tampon (34) est une mémoire tampon asynchrone de type premier entré, premier sorti (FIFO).
